# EUROPEAN PATENT SPECIFICATION

(11) **EP 3 291 194 B1**
(45) Date of publication and mention of the grant of the patent: **04.11.2020**
(21) Application number: 17189285.4
(22) Date of filing: 04.09.2017
(51) Int. Cl.: G08B 25/01, G08B 25/00

(54) **PORTABLE EMERGENCY ALERT DEVICE**
TRAGBARE NOTFALLALARMVORRICHTUNG
DISPOSITIF D'ALERTE D'URGENCE PORTABLE

(30) Priority: 04.09.2016 US 201662383433 P
(43) Date of publication of application: 07.03.2018
(73) Proprietor: Essence Smartcare Ltd., 4672530 Herzlia Pituach (IL)
(72) Inventor: AMIR, Ohad, 4642300 Herzlia (IL)
(74) Representative: Kramer, Dani

(56) References cited:
- EP-A2- 2 779 129
- WO-A1-2009/033228
- US-A1- 2014 266 705

## Description

### FIELD AND BACKGROUND OF THE INVENTION

The present invention, in some embodiments thereof, relates to an emergency alert device and, more particularly, but not exclusively, to a portable dual-communication emergency alert device.

An emergency alert device, also known as a panic button or panic alarm, is an electronic device designed to assist in alerting in emergency situations where a threat to persons or property exists. A panic button is often carried by elderly or sick people, or installed at their homes. Some panic buttons are designed to be constantly carried by the person, for example in the form of a bracelet.

A panic button may be designed to be pressed, or otherwise receive or obtain an indication when a person needs help, due to illness, attack or any other reason. The panic button then contacts, directly or indirectly, someone that may contact the person or come to help, such as an emergency center, a neighbor, a relative, or the like

US2014/266705, WO2009/033228 and EP2779129 disclose emergency alert systems and methods with dual communication.

### SUMMARY OF THE INVENTION

Aspects and embodiments of the present invention are set out in the appended claims. These and other aspects and embodiments of the invention are also described herein.

According to an aspect of some embodiments of the present invention there is provided a portable emergency alert device according to claim 1.

Optionally, the second transmitter is a Bluetooth® transmitter; the portable relay device is a mobile phone; the first transmitter is a radio transmitter; and the stationary relay device is a radio hub device.

Optionally, the first transmitter and the stationary relay device use different communication protocol than the second transmitter and the portable relay device.

Optionally, the first transmitter and the stationary relay device use different communication method than the second transmitter and the portable relay device.

Optionally, the portable emergency alert device is a wearable device.

More optionally, the portable emergency is one of a bracelet and a pendant.

Optionally, the sensor includes at least one of a physical button; a touch screen; and a voice sensor and analysis component, for receiving the indication from the user.

Optionally, sensor includes at least one sensor element for monitoring health parameters of the user.

Optionally, the emergency alert device further comprises a battery which provides energy for the first transmitter and the second transmitter for at least one year.

According to an aspect of some embodiments of the present invention there is provided a method for alerting emergency situations via dual-communication, according to claim 10.

Optionally, the processing includes selecting one of the at least two transmitters to transmit the alert.

Optionally, the method further comprises transmitting the alert of from another one of the at least two transmitters to a corresponding another one of the at least two relay devices which is configured to transmit the alert to the emergency center.

According to an aspect of some embodiments of the present invention there is provided a system for alerting emergency situations via dual-communication, according to claim 13.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a schematic illustration of a system for alerting emergency situations via dual-communication, according to some embodiments of the present invention; and
FIG. 2 is a flowchart schematically representing a method for alerting emergency situations via dual-communication, according to some embodiments of the present invention.

### DESCRIPTION OF EMBODIMENTS OF THE INVENTION

The present invention, in some embodiments thereof, relates to an emergency alert device and, more particularly, but not exclusively, to a portable dual-communication emergency alert device.

According to some embodiments of the present invention, there is provided a device that communicates an alert in emergency situations, having at least two transmitters, each for communicating the alert via a different relay device.

One technical problem with existing portable emergency alert devices relates to their connectivity. A connection to an emergency center, whether direct or indirect, has to be ensured at all times. This is more critical in the case of emergency alert devices relative or other communication devices. Some existing emergency alert devices transmit the alert to a hub or other gateway via radio communication, which in turn communicates with an emergency center. A significant drawback of this method is that it is available only when the person is at home and within the reception range of the hub. Other existing emergency alert devices transmit the alert via short range wireless communication such as Bluetooth® to a mobile phone, which in turn may communicate with an emergency center or another entity such as a relative, through cellular network. A frequent problem with this solution is that a person does not always carry the mobile phone, especially when at home, and may not be close enough for Bluetooth® communication to be enabled.

To solve this problem, some existing portable emergency alert devices transmit the alert directly via cellular network (for example a mobile phone of the user having installed thereon a corresponding application). However, a significant drawback of this method is that the battery life expectancy of the device is a few days at most, after which the device needs recharging. It is undesired that a device used by a person, in particular elderly person, has to be recharged or have its battery replaced often.

According to some embodiments of the present invention, there is provided a portable emergency alert device, which may be constantly carried by a user, such as a bracelet, and is able to communicate via different relay devices. One of these relay devices is stationary (such as a hub located for example at the home of the user) and one is mobile (such as a mobile phone). This way, the portable emergency alert device is in range of at least one of the relay devices both at home and outside, which ensures connectivity both inside the house and outside (a person usually carries his mobile phone close to his body when outside), and provides better reliability for transmitting the alert. Also, the portable emergency alert device may not have high consumption of energy when the relay devices are relatively close to the portable emergency alert device.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

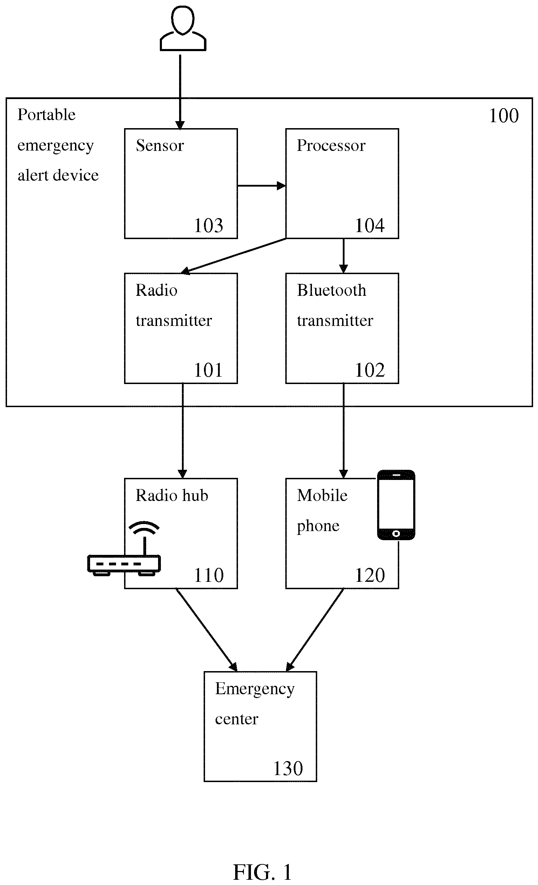

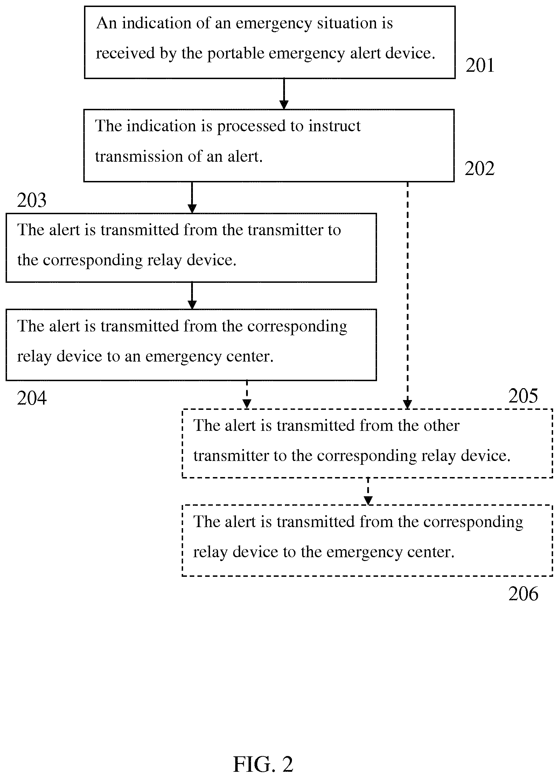

Referring now to the drawings, FIG. 1 is a schematic illustration of a system for alerting emergency situations via dual-communication, according to some embodiments of the present invention. Reference is also made to FIG. 2, which is a flowchart schematically representing a method for alerting emergency situations via dual-communication, according to some embodiments of the present invention.

A portable emergency alert device 100 includes at least two transmitters, each transmits an alert to one of at least two relay devices. Optionally, the transmitters and the relay devices are of different types and/or use different communication methods and/or protocols, to increase the chances of successful transmission. Optionally, the transmitters and the relay devices use different frequencies and/or different amplitudes of signals. Any of the relay devices may be any device that includes a receiver to receive the transmitted alert from at least one of the transmitters and is able to transmit the alert to an emergency center. Any of the relay devices may include one or more components or separate devices.

For example, portable emergency alert device 100 includes radio transmitter 101 which transmits an alert to a radio hub 110 which is used as a stationary relay device; and a Bluetooth® transmitter 102 which transmits an alert to a mobile phone 120 which is used as a mobile relay device. Radio hub 110 may be a stationary device or multiple connected devices, and may also be any kind of radio gateway. Mobile phone 120 may be any kind of smart mobile device in which Bluetooth® communication is enabled, and may also be any other Bluetooth® device or a combination of devices.

Other types of technologies of optional transmitters and/or relay devices may include WiFi, near-field communication (NFC), and/or any other technology. These may be chosen based on performance, price and/or other considerations. The transmitters may use any communication protocol, including for example, internet protocols such as transmission control protocol / internet protocol (TCP/IP) and/or user datagram protocol (UDP), any Bluetooth® protocol, and/or any other protocol according to the transmission type.

Portable emergency alert device 100 may be any kind of mobile device, optionally designed to be carried by the user at all times. For example, portable emergency alert device 100 may be (or included in) a wearable device such as a bracelet, a pendant, Google glass, a smart watch an electronic sticker or the like.

First, as shown at 201, an indication of an emergency situation is received by sensor 103. The indication may be received from a user by sensor 103, to indicate stress, panic or other need for help. This may be done, for example, for example by pressing a physical button included in sensor 103, touching a touch screen included in sensor 103 in a predetermined area, making sounds received by a voice sensor and analyzed by an analysis component included in sensor 103, and/or by any other input method. The indication may also be received from sensor element(s) included in sensor 103, for example sensors monitoring health parameters of the user's body (such as blood pressure, pulse, sugar levels and/or any other parameter) or accelerometers for identifying a sudden fall.

Then, as shown at 202, the indication of an emergency situation is processed by a processor 104 to instruct transmission of an alert by at least one of radio transmitter 101 and Bluetooth® transmitter 102 via a corresponding relay device. Optionally, one of radio transmitter 101 or Bluetooth® transmitter 102 is selected to transmit the alert, as part of the processing.

A transmitter is selected based on proximity to the corresponding relay device. For example, when the user is at home and within range of radio hub 110, radio transmitter 101 transmits an alert to radio hub 110. For another example, when the user is outside and carrying mobile phone 120, Bluetooth® transmitter 102 transmits an alert to mobile phone 120. The proximity and/or range of portable emergency alert device 100 to the relay device may be detected, for example, by a receiver which receives signals from the relay device. The receiver may be part of the corresponding transmitter or located separately within portable emergency alert device 100. Optionally, the proximity to radio hub 110 is determined by monitoring the location of the user (such as at home or outside), for example using a global positioning system (GPS) such as included in mobile phone 120.

Optionally, a transmitter is selected based on the proper operation of transmitters 101 and 102 or relay devices 110 and 120. For example, when a malfunction is detected in radio transmitter 101, Bluetooth® transmitter 102 transmits an alert to mobile phone 120. For another example, when mobile phone 120 has low battery and may shut down, radio transmitter 101 transmits an alert to radio hub 110.

Optionally, a transmitter is selected based on the indication received by sensor 103 and/or the type of emergency that is concluded from the indication by processor 104. For example, in the absence of location information, a transmitter may be selected according the indicated type of fall the user has suffered, which may indicate whether the user is currently at home or outdoors.

Alternatively, both of transmitters 101 and 102 are selected to transmit the alert, simultaneously or sequentially.

Then, as shown at 203, the alert is transmitted from the selected transmitter (radio transmitter 101 or Bluetooth® transmitter 102) to the corresponding relay device (radio hub 110 or mobile phone 120 respectively).

Then, as shown at 204, the alert is transmitted from the corresponding relay device (radio hub 110 or mobile phone 120) to an emergency center 130. This may be done via any kind of communication. For example, radio hub 110 may communicate with emergency center 130 via public switched telephone network (PSTN), local area network (LAN), optic fibers communication, cellular communication, wireless communication such as WiFi and/or any other communication method. For another example, mobile phone 120 may communicate with emergency center 130 via cellular communication, wireless communication such as WiFi and/or any other communication method.

Emergency center 130 may be, for example, a communication center of a medical facility, a control center, or an emergency service. Emergency center 130 may also include a communication device of a friend, family member of a doctor of the user who may help in case of emergency.

Optionally, as shown at 205, an alert is also transmitted from the other transmitter to a corresponding relay device, and then transmitted from the corresponding relay device to emergency center 130, as shown at 206. Optionally, this is done simultaneously, automatically after or concurrently with the alert being transmitted from the selected transmitter (as shown at 203 and 204), to further increase the reliability of transmitting the alert to emergency center 130. Optionally, this is done only when an indication of failure to transmit the alert from the selected transmitter or the corresponding selected relay device is detected. A failure may be detected, for example, by not receiving acknowledgement or confirmation from the relay device and/or from emergency center 130, for example within a predetermined time frame, that the alert was successfully received by relay the device and/or emergency center 130 respectively, for example by a receiver as described above.

Optionally, portable emergency alert device 100 includes a power source such as battery 140, which provides energy for radio transmitter 101 and Bluetooth® transmitter 102. Optionally, battery 140 provides energy, without replacement or recharging, for at least one year.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the invention as defined by the claims. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant emergency alert devices will be developed and the scope of the terms emergency alert device and panic button is intended to include all such new technologies *a priori.*

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention. To the extent that section headings are used, they should not be construed as necessarily limiting.

It will be understood that the invention has been described above purely by way of example, and modifications of detail can be made within the scope of the invention as defined by the claims.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A portable emergency alert device (100) to be carried by a user, comprising:
a sensor (103) for receiving an indication of an emergency situation of the user;
a first transmitter (101) for transmitting said alert to an emergency center (130) via a stationary relay device (110);
a second transmitter (102) for transmitting said alert to said emergency center (130) via a portable relay device (120) and
a processor (104) for processing said indication to instruct transmission of said alert by at least one of said first transmitter and said second transmitter,
wherein:
the stationary relay device is a radio hub that is a radio gateway at a home of the user, and the portable relay device is a mobile phone to be carried by the user when outside the home so that the portable emergency alert device is in range of at least one of the stationary relay device and the portable relay device for connectivity both inside and outside the home; and
wherein:
when the user is at the home and within range of the radio hub, the first transmitter transmits the alert to the radio hub; and when the user is outside the home and carrying the mobile phone, the second transmitter transmits the alert to the mobile phone.

2. The portable emergency alert device (100) of claim 1, wherein said second transmitter (102) is a Bluetooth® transmitter; said portable relay device (120) is a mobile phone; said first transmitter (101) is a radio transmitter; and said stationary relay device (110) is a radio hub device.

3. The portable emergency alert device (100) of claim 1 or 2, wherein said first transmitter (101) and said stationary relay device (110) use different communication protocol than said second transmitter (102) and said portable relay device (120).

4. The portable emergency alert device (100) of any one of the preceding claims, wherein said first transmitter (101) and said stationary relay device (110) use different communication method than said second transmitter (102) and said portable relay device (120).

5. The portable emergency alert device (100) of any one of the preceding claims, wherein said portable emergency alert device is a wearable device.

6. The portable emergency alert device (100) of claim 5, wherein said portable emergency alert device is one of a bracelet and a pendant.

7. The portable emergency alert device (100) of any one of the preceding claims, wherein said sensor (103) includes at least one of a physical button; a touch screen; and a voice sensor and analysis component, for receiving said indication from said user.

8. The portable emergency alert device (100) of any one of the preceding claims, wherein said sensor (103) includes at least one sensor element for monitoring health parameters of said user.

9. The portable emergency alert device (100) of any one of the preceding claims, further comprising a battery which provides energy for said first transmitter and said second transmitter for at least one year.

10. A method for alerting emergency situations via dual-communication, comprising:
receiving (201) an indication of an emergency situation of a user of a portable emergency alert device (100) carried by the user, said portable emergency alert device includes at least two transmitters (101, 102) each configured to communicate with one of at least two relay devices (110, 120); and
processing (202) said indication and instructing (203) transmission of an alert of said emergency situation by at least one of said at least two transmitters,
wherein the at least two transmitters comprises:
a first transmitter (101) for transmitting said alert to an emergency center (130) via a stationary relay device,
a second transmitter (102) for transmitting said alert to said emergency center (130) via a portable relay device (120);
wherein:
the stationary relay device is a radio hub that is a radio gateway at a home of the user, and the portable relay device is a mobile phone to be carried by the user when outside the home, so that the portable emergency alert device is in range of at least one of the stationary relay device and the portable relay device for connectivity both inside and outside the home; and
wherein the method further comprises:
when the user is at the home and within range of the radio hub, the first transmitter transmits the alert to the radio hub; and when the user is outside the home and carrying the mobile phone, the second transmitter transmits the alert to the mobile phone.

11. The method of claim 10, wherein said processing (202) includes selecting one of said at least two transmitters (101, 102) to transmit said alert.

12. The method of claim 10 or 11, further comprising:
transmitting (206) said alert from another one of said at least two transmitters to a corresponding another one of said at least two relay devices which is configured to transmit said alert to said emergency center.

13. A system for alerting emergency situations via dual-communication, comprising:
a portable emergency alert device (100) to be carried by a user, comprising:
a sensor (103) for receiving an indication of an emergency situation of the user;
a first transmitter (101) for transmitting said alert;
a second transmitter (102) for transmitting said alert; and
a processor (104) for processing said indication to instruct transmission of said alert by at least one of said a first transmitter and said second transmitter;
a stationary relay device (110) for receiving said alert from said first transmitter, and transmitting said alert to an emergency center (130); and
a portable relay device (120) for receiving said alert from said second transmitter, and transmitting said alert to said emergency center (130),
wherein:
the stationary relay device is a radio hub that is a radio gateway at a home of the user, and the portable relay device is a mobile phone to be carried by the user when outside the home so that the portable emergency alert device is in range of at least one of the stationary relay device and the portable relay device for connectivity both inside and outside the home; and
wherein:
when the user is at the home and within range of the radio hub, the first transmitter transmits the alert to the radio hub; and when the user is outside the home and carrying the mobile phone, the second transmitter transmits the alert to the mobile phone.

## Patentansprüche

1. Tragbare Notfallwarnvorrichtung (100), die von einem Benutzer getragen werden soll und Folgendes umfasst:
einen Sensor (103) zum Empfangen einer Anzeige einer Notfallsituation des Benutzers;
einen ersten Sender (101) zum Senden des genannten Alarms an eine Notrufzentrale (130) über eine stationäre Relaisvorrichtung (110);
einen zweiten Sender (102) zum Übertragen des genannten Alarms an die genannte Notrufzentrale (130) über eine tragbare Relaisvorrichtung (120) und
einen Prozessor (104) zum Verarbeiten der genannten Anzeige, um die Übertragung des genannten Alarms durch den genannten ersten Sender und/oder den genannten zweiten Sender anzuweisen;
wobei:
die stationäre Relaisvorrichtung ein Funkknoten ist, der ein Funkgateway bei einem Benutzer zu Hause ist, und die tragbare Relaisvorrichtung ein Mobiltelefon ist, das der Benutzer außerhalb des Hauses tragen kann, so dass sich die tragbare Notfallwarnvorrichtung in Reichweite der stationären Relaisvorrichtung und/oder der tragbaren Relaisvorrichtung für die Verbindung sowohl innerhalb als auch außerhalb des Hauses befindet; und
wobei:
wenn sich der Benutzer zu Hause und in Reichweite des Funkknotens befindet, der erste Sender den Alarm an den Funkknoten sendet, und wenn sich der Benutzer außerhalb des Hauses befindet und das Mobiltelefon trägt, der zweite Sender den Alarm an das Mobiltelefon sendet.

2. Tragbare Notfallwarnvorrichtung (100) nach Anspruch 1, wobei der genannte zweite Sender (102) ein Bluetooth®-Sender ist; die genannte tragbare Relaisvorrichtung (120) ein Mobiltelefon ist; der genannte erste Sender (101) ein Funksender ist; und die genannte stationäre Relaisvorrichtung (110) eine Funkknoten-Vorrichtung ist.

3. Tragbare Notfallwarnvorrichtung (100) nach Anspruch 1 oder 2, wobei der genannte erste Sender (101) und die genannte stationäre Relaisvorrichtung (110) ein anderes Kommunikationsprotokoll als der genannte zweite Sender (102) und die genannte tragbare Relaisvorrichtung (120) verwendet.

4. Tragbare Notfallwarnvorrichtung (100) nach einem der vorhergehenden Ansprüche, wobei der genannte erste Sender (101) und die genannte stationäre Relaisvorrichtung (110) ein anderes Kommunikationsverfahren verwenden als der genannte zweite Sender (102) und die genannte tragbare Relaisvorrichtung (120).

5. Tragbare Notfallwarnvorrichtung (100) nach einem der vorhergehenden Ansprüche, wobei die genannte tragbare Notfallwarnvorrichtung eine tragbare Vorrichtung ist.

6. Tragbare Notfallwarnvorrichtung (100) nach Anspruch 5, wobei die genannte tragbare Notfallwarnvorrichtung ein Armband oder ein Anhänger ist.

7. Tragbare Notfallwarnvorrichtung (100) nach einem der vorhergehenden Ansprüche, wobei der genannte Sensor (103) mindestens einen physikalischen Knopf; einen Berührungsbildschirm; und/oder einen Sprachsensor und eine Analysekomponente zum Empfangen der genannten Anzeige von dem genannten Benutzer umfasst.

8. Tragbare Notfallwarnvorrichtung (100) nach einem der vorhergehenden Ansprüche, wobei der genannte Sensor (103) mindestens ein Sensorelement zum Überwachen von Gesundheitsparametern des genannten Benutzers umfasst.

9. Tragbare Notfallwarnvorrichtung (100) nach einem der vorhergehenden Ansprüche, die ferner eine Batterie umfasst, die mindestens ein Jahr lang Energie für den genannten ersten Sender und den genannten zweiten Sender liefert.

10. Verfahren zum Warnen von Notfallsituationen über Doppelkommunikation, das Folgendes umfasst:
Empfangen (201) eines Hinweises auf eine Notfallsituation eines Benutzers einer tragbaren Notfallwarnvorrichtung (100), die von dem Benutzer getragen wird, wobei die genannte tragbare Notfallwarnvorrichtung mindestens zwei Sender (101, 102) umfasst, die jeweils dafür konfiguriert sind, mit einer von mindestens zwei Relaisvorrichtungen (110, 120) zu kommunizieren; und
Verarbeiten (202) der genannten Anzeige und Anweisen (203) der Übermittlung eines Alarms über die genannte Notfallsituation durch mindestens einen der genannten mindestens zwei Sender;
wobei die mindestens zwei Sender Folgendes umfassen:
einen ersten Sender (101) zum Senden des genannten Alarms an eine Notrufzentrale (130) über eine stationäre Relaisvorrichtung,
einen zweiten Sender (102) zum Übertragen des genannten Alarms an die genannte Notrufzentrale (130) über eine tragbare Relaisvorrichtung (120);
wobei:
die stationäre Relaisvorrichtung ein Funkknoten ist, der ein Funkgateway bei einem Benutzer zu Hause ist, und die tragbare Relaisvorrichtung ein Mobiltelefon ist, das der Benutzer außerhalb des Hauses tragen kann, so dass sich die tragbare Notfallwarnvorrichtung in Reichweite der stationären Relaisvorrichtung und/oder der tragbaren Relaisvorrichtung für die Verbindung sowohl innerhalb als auch außerhalb des Hauses befindet; und
wobei das Verfahren ferner Folgendes umfasst:
wenn sich der Benutzer zu Hause und in Reichweite des Funkknotens befindet, sendet der erste Sender den Alarm an den Funkknoten, und wenn sich der Benutzer außerhalb des Hauses befindet und das Mobiltelefon trägt, sendet der zweite Sender den Alarm an das Mobiltelefon.

11. Verfahren nach Anspruch 10, wobei die genannte Verarbeitung (202) das Auswählen eines der genannten mindestens zwei Sender (101, 102) zum Senden des genannten Alarms umfasst.

12. Verfahren nach Anspruch 10 oder 11, das ferner Folgendes umfasst:
Senden (206) des genannten Alarms von einem anderen der genannten mindestens zwei Sender an eine entsprechende andere der genannten mindestens zwei Relaisvorrichtungen, die dafür konfiguriert ist, den genannten Alarm an die genannte Notrufzentrale zu senden.

13. System zum Warnen von Notfallsituationen über Doppelkommunikation, das Folgendes umfasst:
eine tragbare Notfallwarnvorrichtung (100), die von einem Benutzer getragen werden soll und Folgendes umfasst:
einen Sensor (103) zum Empfangen einer Anzeige einer Notfallsituation des Benutzers;
einen ersten Sender (101) zum Senden des genannten Alarms;
einen zweiten Sender (102) zum Senden des genannten Alarms; und
einen Prozessor (104) zum Verarbeiten der genannten Anzeige, um die Übertragung des genannten Alarms durch den genannten ersten Sender und/oder den genannten zweiten Sender anzuweisen;
eine stationäre Relaisvorrichtung (110) zum Empfangen des genannten Alarms von dem genannten ersten Sender und zum Senden des genannten Alarms an eine Notrufzentrale (130); und
eine tragbare Relaisvorrichtung (120) zum Empfangen des genannten Alarms von dem genannten zweiten Sender und zum Senden des genannten Alarms an die genannte Notrufzentrale (130),
wobei:
die stationäre Relaisvorrichtung ein Funkknoten ist, der ein Funkgateway bei einem Benutzer zu Hause ist, und die tragbare Relaisvorrichtung ein Mobiltelefon ist, das der Benutzer außerhalb des Hauses tragen kann, so dass sich die tragbare Notfallwarnvorrichtung in Reichweite der stationären Relaisvorrichtung und/oder der tragbaren Relaisvorrichtung für die Verbindung sowohl innerhalb als auch außerhalb des Hauses befindet; und
wobei:
wenn sich der Benutzer zu Hause und in Reichweite des Funkknotens befindet, der erste Sender den Alarm an den Funkknoten sendet, und wenn sich der Benutzer außerhalb des Hauses befindet und das Mobiltelefon trägt, der zweite Sender den Alarm an das Mobiltelefon sendet.

## Revendications

1. Dispositif d'alerte d'urgence portable (100) destiné à être porté par un utilisateur, comportant :
un capteur (103) servant à recevoir une indication d'une situation d'urgence de l'utilisateur ;
un premier émetteur (101) servant à émettre ladite alerte à un centre d'urgence (130) par le biais d'un dispositif de relais fixe (110) ;
un deuxième émetteur (102) servant à émettre ladite alerte audit centre d'urgence (130) par le biais d'un dispositif de relais portable (120) et
un processeur (104) servant à traiter ladite indication pour ordonner l'émission de ladite alerte par au moins l'un parmi ledit premier émetteur et ledit deuxième émetteur,
dans lequel :
le dispositif de relais fixe est un concentrateur radio qui est une passerelle radio dans une résidence de l'utilisateur, et le dispositif de relais portable est un téléphone mobile destiné à être porté par l'utilisateur quand il est à l'extérieur de la résidence de telle sorte que le dispositif d'alerte d'urgence portable se trouve dans la portée d'au moins l'un parmi le dispositif de relais fixe et le dispositif de relais portable à des fins de connectivité à la fois à l'intérieur et à l'extérieur de la résidence ; et
dans lequel :
quand l'utilisateur est dans la résidence et dans la portée du concentrateur radio, le premier émetteur émet l'alerte au concentrateur radio ; et quand l'utilisateur est à l'extérieur de la résidence et qu'il porte le téléphone mobile, le deuxième émetteur émet l'alerte au téléphone mobile.

2. Dispositif d'alerte d'urgence portable (100) selon la revendication 1, dans lequel ledit deuxième émetteur (102) est un émetteur Bluetooth® ; ledit dispositif de relais portable (120) est un téléphone mobile ; ledit premier émetteur (101) est un émetteur radio ; et ledit dispositif de relais fixe (110) est un dispositif formant concentrateur radio.

3. Dispositif d'alerte d'urgence portable (100) selon la revendication 1 ou la revendication 2, dans lequel ledit premier émetteur (101) et ledit dispositif de relais fixe (110) utilisent un protocole de communication différent par rapport audit deuxième émetteur (102) et audit dispositif de relais portable (120).

4. Dispositif d'alerte d'urgence portable (100) selon l'une quelconque des revendications précédentes, dans lequel ledit premier émetteur (101) et ledit dispositif de relais fixe (110) utilisent un procédé de communication différent par rapport audit deuxième émetteur (102) et audit dispositif de relais portable (120).

5. Dispositif d'alerte d'urgence portable (100) selon l'une quelconque des revendications précédentes, dans lequel ledit dispositif d'alerte d'urgence portable est un dispositif portable de type vestimentaire.

6. Dispositif d'alerte d'urgence portable (100) selon la revendication 5, dans lequel ledit dispositif d'alerte d'urgence portable est l'un parmi un bracelet et un pendentif.

7. Dispositif d'alerte d'urgence portable (100) selon l'une quelconque des revendications précédentes, dans lequel ledit capteur (103) comprend au moins l'un parmi un bouton physique ; un écran tactile ; et un capteur vocal et un composant d'analyse, servant à recevoir ladite indication en provenance dudit utilisateur.

8. Dispositif d'alerte d'urgence portable (100) selon l'une quelconque des revendications précédentes, dans lequel ledit capteur (103) comprend au moins un élément de capteur servant à surveiller des paramètres de santé dudit utilisateur.

9. Dispositif d'alerte d'urgence portable (100) selon l'une quelconque des revendications précédentes, comportant par ailleurs une batterie qui fournit de l'énergie pour ledit premier émetteur et ledit deuxième émetteur pendant au moins une année.

10. Procédé servant à signaler des situations d'urgence par le biais d'une double communication, comportant les étapes consistant à :
recevoir (201) une indication d'une situation d'urgence d'un utilisateur d'un dispositif d'alerte d'urgence portable (100) porté par l'utilisateur, ledit dispositif d'alerte d'urgence portable comprend au moins deux émetteurs (101, 102) qui sont chacun configurés pour communiquer avec l'un d'au moins deux dispositifs de relais (110, 120) ; et
traiter (202) ladite indication et ordonner (203) une émission d'une alerte de ladite situation d'urgence par au moins l'un desdits au moins deux émetteurs,
dans lequel lesdits au moins deux émetteurs comportent :
un premier émetteur (101) servant à émettre ladite alerte à un centre d'urgence (130) par le biais d'un dispositif de relais fixe,
un deuxième émetteur (102) servant à émettre ladite alerte audit centre d'urgence (130) par le biais d'un dispositif de relais portable (120) ;
dans lequel :
le dispositif de relais fixe est un concentrateur radio qui est une passerelle radio dans une résidence de l'utilisateur, et le dispositif de relais portable est un téléphone mobile destiné à être porté par l'utilisateur quand il est à l'extérieur de la résidence, de telle sorte que le dispositif d'alerte d'urgence portable se trouve dans la portée d'au moins l'un parmi le dispositif de relais fixe et le dispositif de relais portable à des fins de connectivité à la fois à l'intérieur et à l'extérieur de la résidence ; et
dans lequel le procédé comporte par ailleurs :
quand l'utilisateur est dans la résidence et dans la portée du concentrateur radio, le premier émetteur émet l'alerte au concentrateur radio ; et quand l'utilisateur est à l'extérieur de la résidence et qu'il porte le téléphone mobile, le deuxième émetteur émet l'alerte au téléphone mobile.

11. Procédé selon la revendication 10, dans lequel ladite étape consistant à traiter (202) comprend l'étape consistant à sélectionner l'un desdits au moins deux émetteurs (101, 102) pour émettre ladite alerte.

12. Procédé selon la revendication 10 ou la revendication 11, comportant par ailleurs l'étape consistant à :
émettre (206) ladite alerte en provenance d'un autre parmi lesdits au moins deux émetteurs à un autre dispositif correspondant parmi lesdits au moins deux dispositifs de relais qui est configuré pour émettre ladite alerte audit centre d'urgence.

13. Système servant à signaler des situations d'urgence par le biais d'une double communication, comportant :
un dispositif d'alerte d'urgence portable (100) destiné à être porté par un utilisateur, comportant :
un capteur (103) servant à recevoir une indication d'une situation d'urgence de l'utilisateur ;
un premier émetteur (101) servant à émettre ladite alerte ;
un deuxième émetteur (102) servant à émettre ladite alerte ; et
un processeur (104) servant à traiter ladite indication pour ordonner l'émission de ladite alerte par au moins l'un parmi lesdits un premier émetteur et ledit deuxième émetteur ;
un dispositif de relais fixe (110) servant à recevoir ladite alerte en provenance dudit premier émetteur, et servant à émettre ladite alerte à un centre d'urgence (130) ; et
un dispositif de relais portable (120) servant à recevoir ladite alerte en provenance dudit deuxième émetteur, et servant à émettre ladite alerte audit centre d'urgence (130),
dans lequel :
le dispositif de relais fixe est un concentrateur radio qui est une passerelle radio dans une résidence de l'utilisateur, et le dispositif de relais portable est un téléphone mobile destiné à être porté par l'utilisateur quand il est à l'extérieur de la résidence de telle sorte que le dispositif d'alerte d'urgence portable se trouve dans la portée d'au moins l'un parmi le dispositif de relais fixe et le dispositif de relais portable à des fins de connectivité à la fois à l'intérieur et à l'extérieur de la résidence ; et
dans lequel :
quand l'utilisateur est dans la résidence et dans la portée du concentrateur radio, le premier émetteur émet l'alerte au concentrateur radio ; et quand l'utilisateur est à l'extérieur de la résidence et qu'il porte le téléphone mobile, le deuxième émetteur émet l'alerte au téléphone mobile.
